(19) Europäisches Patentamt
European Patent Office
Office européen des brevets

(11) **EP 4 503 201 A1**

(12) **EUROPEAN PATENT APPLICATION**
published in accordance with Art. 153(4) EPC

(43) Date of publication:
**05.02.2025 Bulletin 2025/06**

(21) Application number: **23826443.6**

(22) Date of filing: **20.06.2023**

(51) International Patent Classification (IPC):
**H01M 4/62** (2006.01)          **H01M 4/13** (2010.01)

(52) Cooperative Patent Classification (CPC):
**H01M 4/13; H01M 4/62; H01M 10/052;** Y02E 60/10

(86) International application number:
**PCT/CN2023/101456**

(87) International publication number:
**WO 2023/246796 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022   CN 202210708415**

(71) Applicant: **BYD Company Limited
Shenzhen, Guangdong 518118 (CN)**

(72) Inventors:
• **GUO, Zizhu
Shenzhen, Guangdong 518118 (CN)**

• **HAN, Xiaoyan
Shenzhen, Guangdong 518118 (CN)**
• **MA, Yongjun
Shenzhen, Guangdong 518118 (CN)**
• **PAN, Yi
Shenzhen, Guangdong 518118 (CN)**
• **SUN, Huajun
Shenzhen, Guangdong 518118 (CN)**

(74) Representative: **Taor, Simon Edward William et al
Venner Shipley LLP
200 Aldersgate
London EC1A 4HD (GB)**

(54) **NEGATIVE ELECTRODE SHEET, SECONDARY BATTERY, AND ELECTRICAL DEVICE**

(57)     The present application discloses a negative electrode sheet, a secondary battery, and an electrical device. The negative electrode sheet comprises a negative current collector and a negative electrode active material layer; the negative electrode active material layer is disposed on the surface of the negative current collector; the negative electrode active material layer comprises a negative electrode active material and an additive having compression and rebound properties; after the pressure X is applied in the thickness direction of the negative electrode sheet, the rebound rate of the negative electrode sheet is 2%-40%, and the compression rate of the negative electrode sheet is 2%-40%; and the pressure X satisfies the following: 0.3 Mpa≤X≤5 Mpa.

FIG. 1

**Description**

**CROSS-REFERENCE TO RELATED APPLICATION**

The present disclosure claims priority to and benefits of Chinese Patent Application No. 202210708415.9, entitled "NEGATIVE ELECTRODE SHEET AND APPLICATION THEREFOR" filed on June 21, 2022. The entire content of the above-referenced applications is incorporated herein by reference.

**FIELD**

The present disclosure belongs to the field of batteries, and more specifically, to a negative electrode sheet, a secondary battery, and an electrical device.

**BACKGROUND**

As a demand for electrical vehicles with longer endurance mileage in the market increases gradually, a demand for further improving the energy density of power batteries becomes more and more urgent. High energy density batteries cannot do without the development of high energy density negative electrode sheets. At present, a main method for increasing storage capacity of a negative electrode sheet is to add a proportion of silicon negative electrode materials to a graphite negative electrode, and even to adopt a lithium metal negative electrode. Both silicon negative electrodes and lithium metal negative electrodes suffer from a significant problem of volume expansion during cycling. Most battery usage scenarios require batteries to work within fixed space, so that excessive volume expansion has brought a bottleneck problem to a battery PACK process on one hand, and on the other hand, unguided volume expansion will lead to rapid degradation of cycling performance of the batteries. As a battery made by a high capacity negative electrode is charged, lithium ions enter the negative electrode, the volume of the battery expands. During discharging of the battery, as the lithium ions migrate out of the negative electrode and embed into a positive electrode, the volume of the battery gradually decreases. Therefore, during each cycling process of the battery, the thickness of the battery undergo a process that the volume gradually increases and then the volume gradually decreases. This process is particularly significant for lithium metal batteries and silicon negative electrode batteries. We refer to this periodic change in volume as "battery respiration".

Significant "respiration" during cycling of the battery prepared by using a high capacity negative electrode, a pressure from a pack body born by the battery increases and then decreases periodically due to volume expansion of a battery core with a charging and discharging process in a case that the volume of the pack body of the battery is fixed. Non-uniform change of the pressure born by the battery core is not conducive to good cycling performance of the battery, and leads to rapid degradation of cycling of the high capacity negative electrode. In addition, a significant volume change of the high capacity negative electrode during cycling, that is, significant volume expansion of the negative electrode sheet during charging to significant volume shrinkage during discharging, will lead to that physical contact between active particles of the negative electrode sheet becomes poor and result in material inactivation on one hand, and on the other hand, the significant volume change of the electrode sheet poses a great challenge to the ductility and fatigue resistance of a diaphragm. All of these will lead to deterioration of battery performance.

Therefore, an existing negative electrode sheet is to be improved.

**SUMMARY**

The present disclosure is intended to resolve one of technical problems in a related art at least to some extent. Therefore, an objective of the present disclosure is to provide a negative electrode sheet and an application therefor. The negative electrode sheet has a low volume change rate during cycling of a battery, and meanwhile, physical contact between negative active material particles of the negative electrode sheet may be good, thereby ensuring the stability of the volume of a battery core in a single battery cycling process and simultaneously improving cycling performance of the battery.

According to an aspect of the present disclosure, the present disclosure provides a negative electrode sheet. According to the embodiments of the present disclosure, the negative electrode sheet includes:

a negative current collector; and
a negative electrode active material layer, the negative electrode active material layer being disposed on a surface of the negative current collector, and the negative electrode active material layer including a negative electrode active material and an additive having compression and rebound properties.

After a pressure X is applied in the thickness direction of the negative electrode sheet, the rebound rate of the negative electrode sheet is 2% to 40%, and the compression rate of the negative electrode sheet is 2% to 40%. The pressure X satisfies the following: 0.3 Mpa≤X≤5 Mpa.

According to the negative electrode sheet in an embodiment of the present disclosure, the negative electrode sheet includes the negative current collector and the negative electrode active material layer. The negative electrode active material layer is disposed on the surface of the negative electrode active material layer, and the negative electrode active material layer includes the negative electrode active material and an additive having compression and rebound properties. The additive having compression and rebound properties in the negative electrode active material layer has compression property and rebound property, so that the negative electrode active material layer shows compression and rebound properties. During charging, with the embedding of lithium into a negative electrode, the volume of the negative electrode active material gradually increases, and the thickness of the negative electrode active material layer increases. Under a condition of fixed volume of a battery pack or a battery housing, a pressure born by a battery core from outside (for example, a pack body and a housing) increases. At this moment, under the action of the pressure, the volume of the additive having compression and rebound properties in the negative electrode active material layer shrinks under the action of the pressure to release some space to the active material, thereby buffering significant volume expansion of the active material during embedding the lithium, and retarding significant volume expansion of the negative electrode active material layer during embedding the lithium. During discharging, with the release of lithium ions, the volume of the active material of the negative electrode sheet is reduced. The pressure born by the battery core is reduced, or even eliminated. The volume of the additive having compression and rebound properties rebounds, gradually recovers to the initial volume, and occupies the space released by the volume shrinkage of the active material, thereby buffering the volume shrinkage caused by lithium releasing of the active material in the negative electrode active material layer. Therefore, the negative electrode active material layer having compression and rebound properties may buffer a significant volume change of the negative electrode sheet during charging and discharging. Meanwhile, the additive having compression and rebound properties in the negative electrode active material layer can ensure good physical contact between negative electrode active material particles in the negative electrode active material layer to avoid material inactivation. Therefore, the negative electrode sheet has functions that the volume elastically changes and self-recovers, so that the negative electrode sheet has a relatively low volume change rate during the cycling of the battery, and meanwhile, the physical contact between the negative electrode active material particles in the negative electrode sheet may be good, thereby ensuring the stability of the volume of a battery core during single battery cycling and simultaneously improving the cycling performance of the battery.

Additionally, the negative electrode sheet according to the foregoing embodiment in the present disclosure may further have the following additional technical characteristics:

In some embodiments of the present disclosure, the single-sided thickness of the negative electrode active material layer is 10 μm to 150 μm. Therefore, the cycling stability performance of the battery can be improved.

In some embodiments of the present disclosure, the negative electrode active material and the additive having compression and rebound properties are in a mass ratio of 100:3 to 50. Therefore, the volume change rate of the negative electrode sheet during single electricity cycling can be reduced.

In some embodiments of the present disclosure, the negative electrode active material and the additive having compression and rebound properties are in a mass ratio of 100:3 to 30. Therefore, the volume change rate of the negative electrode sheet during single electricity cycling can be reduced.

In some embodiments of the present disclosure, the negative electrode active material includes at least one of graphite, hard carbon, Si, $SiO_x$, a silicon-carbon material Si/C, Sn, Sb, a silicon-based alloy, a lithium silicon oxide, or a silicon magnesium oxide. The silicon-based alloy further includes at least one of Li, Al, Mg, B, Ni, Fe, Cu, or Co in addition to Si, where the value of x is $0<x<2$. According to the embodiments of the present disclosure, the negative electrode active material layer further includes a bonding agent. The bonding agent includes at least one of polyacrylic acid, sodium alginate, or polyimide. The negative electrode active material and the bonding agent are in the mass ratio of 100:0.05 to 15.

In some embodiments of the present disclosure, the additive having compression and rebound properties is three-dimensional graphene. Therefore, the negative electrode sheet has functions that the volume elastically changes and self-recovers, and reduces the volume change rate of the negative electrode sheet during single electricity cycling.

In some embodiments of the present disclosure, the three-dimensional graphene satisfies at least one of the following conditions (1) to (5): (1) the particle size of the three-dimensional graphene is 500 nm to 20 μm; (2) the pore volume of the three-dimensional graphene is 1 cm³/g to 10 cm³/g; (3) the three-dimensional graphene includes overlapping graphene sheets, and the breaking strength between the graphene sheets is 20 N/m to 50 N/m; (4) the three-dimensional graphene includes overlapping graphene sheets, and the lateral dimension of the graphene sheet is 10 nm to 100 nm; or (5) the average pore size of the three-dimensional graphene is not greater than 250 nm.

In some embodiments of the present disclosure, the lateral dimension of the graphene sheet is 10 nm to 20 nm.

In some embodiments of the present disclosure, the negative electrode active material layer further includes a conductive agent.

In some embodiments of the present disclosure, the negative electrode active material and the conductive agent are in a mass ratio of 100:0 to 2.5.

In some embodiments of the present disclosure, the conductive agent includes at least one of single-walled carbon nanotubes or carbon black.

According to a second aspect of the present disclosure, the present disclosure provides a secondary battery. The secondary battery includes the foregoing negative electrode sheet. Therefore, the secondary battery has excellent cycling stability performance.

According to a third aspect of the present disclosure, the present disclosure provides an electrical device. The electrical device has the foregoing lithium battery.

Advantages of the embodiments of the present disclosure will be partially explained in the following specification, some of which are apparent from the specification, or can be learned through implementation of the embodiments of the present disclosure.

## BRIEF DESCRIPTION OF THE DRAWINGS

Accompanying drawings are intended to provide further understanding of the present disclosure, constitute part of this specification, are used for explaining the present disclosure together with specific embodiments below, but do not constitute a limitation to the present disclosure. In the accompanying drawings:

FIG. 1 is a schematic structural diagram of a negative electrode sheet according to an embodiment of the present disclosure.

FIG. 2 is a diagram of cycling performance test results of batteries obtained by using lithium-rich negative electrode sheets in Embodiment 2 and Comparative Example 2.

## DETAILED DESCRIPTION

Embodiments of the present disclosure are described in detail below, are intended to explain the disclosure, and cannot be understood as a limitation on the present disclosure.

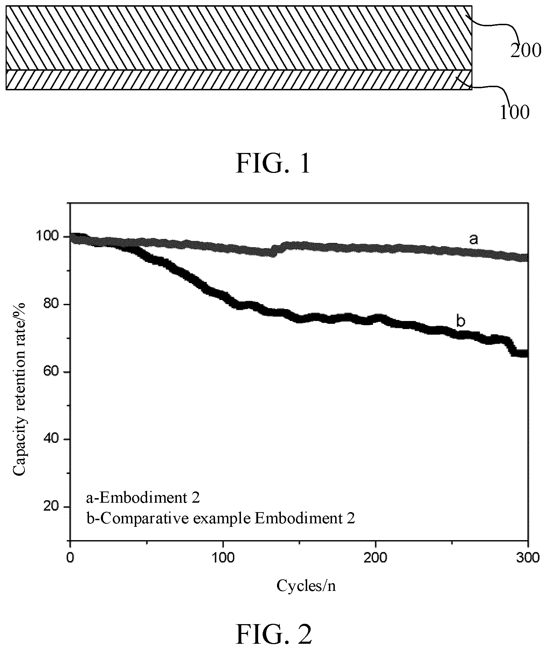

According to an aspect of the present disclosure, the present disclosure provides a negative electrode sheet. According to the embodiments of the present disclosure, referring to FIG. 1, the negative electrode sheet includes a negative current collector 100 and a negative electrode active material layer 200.

It is to be noted that, those skilled in the art may select the material of the negative current collector 100 according to actual needs, for example, using a copper foil.

According to the embodiments of the present disclosure, the negative electrode active material layer 200 is disposed on a surface of the negative current collector 100, and the negative electrode active material layer 200 includes a negative electrode active material and an additive having compression and rebound properties. After a pressure X is applied in the thickness direction of the negative electrode sheet, the rebound rate of the negative electrode sheet is 2% to 40%, and the compression rate of the negative electrode sheet is 2% to 40%. The pressure X satisfies the following: 0.3 Mpa$\leq$X$\leq$5 Mpa. For example, the rebound rate of the negative electrode sheet is 5%, 8%, 10%, 12%, 15%, 18%, 20%, 23%, 25%, 28%, 30%, 32%, 35%, 38%, and 40%. The compression rate of the negative electrode sheet is 5%, 8%, 10%, 12%, 15%, 18%, 20%, 23%, 25%, 28%, 30%, 32%, 35%, 38%, and 40%. The pressure X satisfies 0.3 Mpa, 0.5 Mpa, 0.8 Mpa, 1 Mpa, 1.5 Mpa, 2 Mpa, 2.5 Mpa, 3 Mpa, 3.5 Mpa, 4 Mpa, 4.5 Mpa, and 5 Mpa.

The inventor found that the additive having compression and rebound properties in the negative electrode active material layer 200 has compression property and rebound property, so that the negative electrode active material layer 200 shows compression and rebound properties. During charging, with the embedding of lithium into a negative electrode, the volume of the negative electrode active material gradually increases, and the thickness of the negative electrode sheet increases. Under a condition of fixed volume of a battery pack or a battery housing, a pressure born by a battery core from outside (for example, a pack body and a housing) increases. At this moment, under the action of the pressure, the volume of the additive having compression and rebound properties in the negative electrode active material layer 200 shrinks to release some space to the active material, thereby buffering significant volume expansion of the active material during embedding lithium. During discharging, with the release of lithium ions, the volume of the negative electrode active material is reduced. At this moment, an external pressure born by the battery core is reduced, or even eliminated. The volume of the additive having compression and rebound properties rebounds, and occupies the space released by the volume shrinkage of the active material, thereby buffering the volume shrinkage caused by lithium releasing of the active material in the negative electrode active material layer 200. Meanwhile, the volume of the additive having compression and rebound properties in the negative electrode active material layer 200 rebounds during discharging, which can ensure good physical contact between negative electrode active material particles in the negative electrode active material layer to avoid material inactivation.

In some embodiments of the present disclosure, the single-sided thickness of the foregoing negative electrode active material layer 200 is 10 $\mu$m to 150 $\mu$m, for example, 10 $\mu$m, 15 $\mu$m, 20 $\mu$m, 25 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 95 $\mu$m, 100 $\mu$m, 105 $\mu$m, 110 $\mu$m, 115 $\mu$m, 120 $\mu$m, 125 $\mu$m, 130 $\mu$m, 135 $\mu$m, 140 $\mu$m, 145 $\mu$m, and 150 $\mu$m.

A coating layer in the negative electrode sheet may be coated on a single surface of the current collector, or may be coated on both surfaces of the current collector. Therefore, when the coating layer is coated on the single surface of the current collector, "the single-sided thickness" in the present disclosure refers to the thickness of the negative electrode active material layer 200 of a coated surface. When the coating layer is coated on both surfaces of the current collector, "the single-sided thickness" in the present disclosure refers to the thickness of the negative electrode active material layer 200 of the coating layer on either of the two sides.

In some embodiments of the present disclosure, the negative electrode active material and the additive having compression and rebound properties are in a mass ratio of 100:3 to 50, for example, 100:5 to 45, 100:10 to 40, 100:15 to 35, 100:20 to 30, and 100:25 to 30. The inventor found that, if an adding amount of a bonding agent is too high, not only the cost is increased and the energy density of the battery core is reduced, but also the polarization of the battery is increased and the internal resistance of the battery is increased. If the adding amount of the bonding agent is too low, during battery cycling, electrode pulverization is caused due to a high capacity negative electrode active material in repeated expansion and shrinkage processes, resulting in sharp decline of cycling performance. If an adding amount of the additive having compression and rebound properties is too high, not only the cost is increased, but also the energy density of the battery is reduced. If the adding amount of the additive having compression and rebound properties is too low, good compression and rebound properties of the electrode sheet cannot be achieved. Therefore, the additive having compression and rebound properties in the foregoing proportion is added to the negative electrode active material layer 200, which can improve the cycling stability of the battery while reducing the cost. In some embodiments of the present disclosure, the negative electrode active material and the additive having compression and rebound properties are in a mass ratio of 100:3 to 30.

In some embodiments of the present disclosure, the negative electrode active material includes at least one of graphite, hard carbon, Si, $SiO_x$, a silicon-carbon material Si/C, Sn, Sb, a silicon-based alloy, a lithium silicon oxide, or a silicon magnesium oxide. The silicon-based alloy further includes at least one of Li, Al, Mg, B, Ni, Fe, Cu, or Co in addition to Si, where the value of x is 0<x<2.

In some embodiments of the present disclosure, the additive having compression and rebound properties is three-dimensional graphene. The three-dimensional graphene has good compression and rebound properties and electric conductivity, which can serve as part conductive agent. Meanwhile, the three-dimensional graphene has lithium affinity. In a high lithium-rich negative electrode sheet, lithium is guided to deposit in pores of the electrode sheet, which prevents the lithium from depositing on a surface of the electrode sheet, and reduces volume expansion of the negative electrode sheet during lithium depositing.

In some embodiments of the present disclosure, the three-dimensional graphene satisfies at least one of the following conditions (1) to (5):

(1) the particle size of the three-dimensional graphene is 500 nm to 20 $\mu$m, for example, 1 $\mu$m to 20 $\mu$m, 3 $\mu$m to 18 $\mu$m, 5 $\mu$m to 15 $\mu$m, 7 $\mu$m to 13 $\mu$m, and 10 $\mu$m to 12 $\mu$m;

(2) the pore volume of the three-dimensional graphene is 1 $cm^3$/g to 10 $cm^3$/g, for example, 3 $cm^3$/g to 8 $cm^3$/g, and 5 $cm^3$/g to 7 $cm^3$/g;

(3) the three-dimensional graphene includes overlapping graphene sheets, and the breaking strength between the graphene sheets is 20 N/m to 50 N/m, for example, 25 N/m to 45 N/m, 30 N/m to 45 N/m, 35 N/m to 45 N/m, and 40 N/m to 45 N/m;

(4) the three-dimensional graphene includes overlapping graphene sheets, and the lateral dimension of the graphene sheet is 10 nm to 100 nm, for example, 10 nm to 20 nm, 20 nm to 100 nm, 30 nm to 90 nm, 40 nm to 80 nm, and 50 nm to 70 nm; or

(5) the average pore size of the three-dimensional graphene is not greater than 250 nm, for example, 10 nm, 30 nm, 50 nm, 80 nm, 100 nm, 120 nm, 150 nm, 170 nm, 200 nm, 220 nm, and 250 nm.

In some embodiments of the present disclosure, the maximum pore size of the three-dimensional graphene is 300 nm.

The pore volume of the foregoing three-dimensional graphene may be measured by performing a nitrogen adsorption method on the three-dimensional graphene. The breaking strength between the foregoing graphene sheets may be obtained by performing a nano-indentation test on an overlapping position of the three-dimensional graphene by using an Atomic Force Microscope (AFM). The three-dimensional graphene is fixed to a silicon wafer with small pores formed in a surface. A pressure is applied to the silicon wafer in the small pore by using a probe. The position where the pressure is applied is close to the overlapping position of adjacent graphene sheets. A critical pressure that enables the overlapping position of the two graphene sheets to break is recorded, and the breaking strength at the overlapping position between the graphene sheets is obtained. The foregoing lateral dimension of the graphene sheet refers to a length, a width, and the like of the graphene sheet, and may be obtained through an electron microgram of the three-dimensional graphene.

Specifically, sufficient pore volume may ensure that the three-dimensional graphene has excellent compression property. Appropriate pore size and breaking strength between the graphene sheets ensure that the three-dimensional graphene has good rebound property after being compressed and cannot cause structural collapse and lose rebound property due to the pressure. Meanwhile, the compression-rebound property of the battery is stably maintained during cycling of the battery. The three-dimensional graphene having the above characteristics has excellent compression-rebound performance, so that the prepared negative electrode active material layer 200 shows high compression and rebound properties, thereby buffering significant volume expansion of the negative electrode sheet during charging and discharging.

In some embodiments of the present disclosure, the foregoing three-dimensional graphene may be grown by a Plasma Chemical Vapor Deposition (PECVD) method. An exemplary preparation method includes the following steps: A mixed gas of a carbon source (for example, $C_2H_2$) and $H_2$ is introduced into a deposition chamber heated to a temperature of a plasma deposition device. A plasma generator is started, so as to grow a three-dimensional graphene material on a substrate (for example, Cu) placed in the deposition chamber through the PECVD method. After the growth of the three-dimensional graphene, an auxiliary gas (for example, Ar and He) is introduced to cool the deposition chamber to room temperature in an inert atmosphere. After that, the obtained sample is taken out from the deposition chamber, and the three-dimensional graphene material is peeled off from the substrate and is crushed to a required particle size. Growing conditions may be adjusted to obtain graphene that satisfies at least one of the following conditions (1) to (5):

(1) the particle size of the three-dimensional graphene is 500 nm to 20 $\mu$m;
(2) the pore volume of the three-dimensional graphene is 1 cm$^3$/g to 10 cm$^3$/g;
(3) the three-dimensional graphene includes overlapping graphene sheets, and the breaking strength between the graphene sheets is 20 N/m to 50 N/m;
(4) the three-dimensional graphene includes overlapping graphene sheets, and the lateral dimension of the graphene sheet is 10 nm to 100 nm; or
(5) the average pore size of the three-dimensional graphene is not greater than 250 nm.

An exemplary preparation method includes the following steps: A mixed gas of a carbon source (for example, $C_2H_2$) and $H_2$ is introduced into a deposition chamber heated to a temperature of a plasma deposition device. A plasma generator is started, so as to grow a three-dimensional graphene material on a substrate (for example, Cu) placed in the deposition chamber through the PECVD method. After the growth of the three-dimensional graphene, an auxiliary gas (for example, Ar and He) is introduced to cool the deposition chamber to room temperature in an inert atmosphere. After that, the obtained sample is taken out from the deposition chamber, and the three-dimensional graphene material is peeled off from the substrate and is crushed to a required particle size. Plasma with high energy density and large volume may be generated in a PECVD process, and the carbon source $C_2H_2$ may be decomposed into many carbon containing reactive free radicals, thereby achieving the growth of the three-dimensional graphene. The inflow rate of the $C_2H_2$ is 20 mL/min, the inflow rate of the $H_2$ is 250 mL/min, the temperature for deposition and growth may be 950°C, the inflow rate of the auxiliary gas Ar is 200 mL/min, and the working power of the plasma generator is 300 W

According to the embodiments of the present disclosure, the foregoing negative electrode active material layer 200 further includes a conductive agent, and the negative electrode active material and the conductive agent are in a mass ratio of 100:0 to 2.5, for example, 100:0.05 to 2.2, 100:0.1 to 2, 100:0.3 to 1.8, 100:0.5 to 1.5, 100:0.7 to 1.2, and 100:1 to 1.2. Therefore, the electric conductivity of the negative electrode sheet can be improved. It is to be noted that, those skilled in the art may select a specific type of the conductive agent according to actual demands, for example, the conductive agent includes, but is not limited to, at least one of single-walled carbon nanotubes or carbon black, preferably, the single-walled carbon nanotubes.

In some embodiments of the present disclosure, the foregoing negative electrode active material layer 200 further includes a bonding agent, and the negative electrode active material and the bonding agent are in a mass ratio of 100:0.05 to 15, for example, 100:0.1 to 15, 100:0.2 to 15, 100:0.5 to 15, 100:1 to 15, 100:3 to 15, 100:5 to 15, 100:7 to 15, 100:10 to 15, 100:12 to 15. Therefore, the energy density of the battery core can be improved while reducing the polarization of the electrode sheet.

It is to be noted that, those skilled in the art may select a specific type of the bonding agent according to actual demands, for example, the bonding agent includes, but is not limited to, at least one of polyacrylic acid, sodium alginate, or polyimide. In some embodiments of the present disclosure, the bonding agent includes polyacrylic acid.

In the present disclosure, a method for testing the rebound property and the compression property of the negative electrode sheet is as follows: a pressure with a value of $X_1$ Mpa is applied to the negative electrode sheet along the thickness direction of the negative electrode sheet, and the thickness of the negative electrode sheet under the pressure of

$X_1$ Mpa is measured as $H_1$; and then, the pressure is removed, after the thickness of the negative electrode sheet is stable, the thickness of the negative electrode sheet is measured and denoted as $H_2$, and the thickness rebound rate of the negative electrode sheet is $r_1 = (H_2 - H_1)/H_1$. A pressure with a value of $X_2$ Mpa is applied to the negative electrode sheet with an initial thickness of $H_3$ along the thickness direction of the negative electrode sheet, the thickness of the negative electrode sheet under the pressure of $X_2$ Mpa is measured as $H_4$, and the thickness compression rate of the negative electrode sheet is $p = (H_3 - H_4)/H_3$. Therefore, the foregoing "after a pressure X is applied in the thickness direction of the negative electrode sheet, the rebound rate of the negative electrode sheet is 2% to 40%, and the compression rate of the negative electrode sheet is 2% to 40%; the pressure X satisfies the following: $0.3 \text{ Mpa} \leq X \leq 5 \text{ Mpa}$" may be understood as: the pressure with the value of $X_1$ Mpa is applied to the negative electrode sheet along the thickness direction of the negative electrode sheet, $0.3 \text{ Mpa} \leq X_1 \leq 5 \text{ Mpa}$, and the thickness of the negative electrode sheet under the pressure of $X_1$ Mpa is measured as $H_1$; then, the pressure is removed, after the thickness of the negative electrode sheet is stable, the thickness of the negative electrode sheet is measured and denoted as $H_2$, the thickness rebound rate of the negative electrode sheet is $r_1 = (H_2 - H_1)/H_1$, and $r_1$ is within a range of 2% to 40%; and the pressure with the value of $X_2$ Mpa is applied to the negative electrode sheet with an initial thickness of $H_3$ along the thickness direction of the negative electrode sheet, $0.3 \leq X_2 \leq 5$ Mpa, the thickness of the negative electrode sheet under the pressure of $X_2$ Mpa is measured and denoted as $H_4$, the thickness compression rate of the negative electrode sheet is $p = (H_3 - H_4)/H_3$, and p is within a range of 2% to 40%. $r_1$ and p may be the same or may be different, and $X_1$ and $X_2$ may be the same or may be different.

Therefore, the negative electrode sheet of the present disclosure has functions that the volume elastically changes and self-recovers, so that the negative electrode sheet has a relatively low volume change rate during the cycling of the battery, and meanwhile, the physical contact between the negative electrode active material particles in the negative electrode sheet may be good, thereby ensuring the stability of the volume of a battery core during single battery cycling and simultaneously improving the cycling performance of the battery.

To facilitate understanding, a method for preparing the foregoing negative electrode sheet is described below. According to the embodiments of the present disclosure, the method includes the following steps: negative electrode slurry including a negative electrode active material and an additive having compression and rebound properties is applied to a negative current collector, so as to form a negative electrode active substance layer on the negative current collector to obtain the negative electrode sheet.

According to the embodiments of the present disclosure, the foregoing negative electrode slurry further includes a conductive agent. Therefore, the electric conductivity of the negative electrode sheet can be improved.

Therefore, the negative electrode sheet having functions that the volume elastically changes and self-recovers may be prepared by the method, so that the volume expansion rate generated by a single cycle of the battery during charging and discharging can be reduced, and the cycling stability of the battery can be improved. It is to be noted that, the foregoing features and advantages described for the negative electrode sheet are applicable to the method of preparing the negative electrode sheet, and will not be repeated here.

According to a second aspect of the present disclosure, the present disclosure provides a secondary battery. According to the embodiments of the present disclosure, the secondary battery includes the foregoing negative electrode sheet. Therefore, the secondary battery uses the foregoing negative electrode sheet with high cycling stability, so that the secondary battery shows excellent cycling stability. It is to be noted that, the foregoing features and advantages described for the negative electrode sheet and a preparation method therefor are applicable to the secondary battery, and will not be repeated here.

According to a third aspect of the present disclosure, the present disclosure provides an electrical device. The electrical device may be traffic tools such as a vehicle and ship, and may alternatively be a notebook computer, a mobile terminal, and the like. According to the embodiments of the present disclosure, the electrical device has the foregoing secondary battery. Therefore, the electrical device loads the foregoing secondary battery with excellent cycling stability, so that the electrical device has excellent endurance mileage and safety performance. It is to be noted that, the foregoing features and advantages described for the secondary battery are applicable to the electrical device, and will not be repeated here.

The present disclosure is described below with reference to specific embodiments. It is to be noted that, these embodiments are merely illustrative and are not intended to limit the present disclosure in any way.

**Embodiment 1**

A method for preparing a negative electrode sheet included:
a silicon-carbon Si/C negative electrode with a specific capacity of 1250 mAh/g, polyacrylic acid, and three-dimensional graphene were mixed according to a mass ratio of 100:5:8 to prepare negative electrode slurry, and then the negative electrode slurry was coated on both surfaces of a copper foil with the thickness of 8 $\mu$m (the double-sided surface density wa the same, and the single-sided surface density was 45 g/m$^2$) and was rolled after being cured, so as to form a negative electrode active material layer with the single-sided thickness of 32 $\mu$m on each of the both surfaces of the copper foil to obtain a negative electrode sheet.

The three-dimensional graphene used in Embodiment 1 included overlapping graphene sheets, and the three-dimensional graphene had a porous structure. The average particle size of the three-dimensional graphene was 0.6 $\mu$m, the pore volume was 3 cm$^3$/g, and the average pore size of the porous structure in the three-dimensional graphene was 150 nm. A nanoindentation test was performed through an AFM to obtain the breaking strength at an overlapping position of the overlapping graphene sheets in the three-dimensional graphene of 35 N/m, and the lateral dimension of the overlapping graphene sheets was 10 nm to 100 nm.

**Embodiment 2**

The difference from Embodiment 1 was that: a method for preparing a negative electrode sheet included:

SiO$_x$ (x=1.02), polyacrylic acid, single-walled carbon nanotubes, and three-dimensional graphene were mixed according to a mass ratio of 100:14:0.5:15 to prepare negative electrode slurry, and then the negative electrode slurry was coated on both surfaces of a copper foil with the thickness of 8 $\mu$m (the double-sided surface density was the same, and the single-sided surface density was 40 g/m$^2$) and was rolled after being cured, so as to form a negative electrode active material layer with the single-sided thickness of 28 $\mu$m on each of the both surfaces of the copper foil to obtain a negative electrode sheet. A lithium film with the thickness of 10 microns and the obtained negative electrode sheet were hot-pressed in an inert atmosphere to obtain a lithium-rich negative electrode sheet.

**Embodiment 3**

The difference from Embodiment 1 was that: SiO$_x$ (x=1.02), polyacrylic acid, single-walled carbon nanotubes, and three-dimensional graphene were mixed according to a mass ratio of 100:14:0.5:15 to prepare negative electrode slurry, and then the negative electrode slurry was coated on both surfaces of a copper foil with the thickness of 8 $\mu$m (double-sided surface density was the same, and single-sided surface density was 47.5 g/m$^2$) and was rolled after being cured, so as to form a negative electrode active material layer with the single-sided thickness of 33 $\mu$m on each of the both surfaces of the copper foil to obtain a negative electrode sheet.

**Embodiment 4**

The difference from Embodiment 1 was that: SiO$_x$ (x=1.02), polyacrylic acid, single-walled carbon nanotubes, and three-dimensional graphene were mixed according to a mass ratio of 70:30:7:0.2:5 to prepare negative electrode slurry, and then the negative electrode slurry was coated on both surfaces of a copper foil with the thickness of 8 $\mu$m (double-sided surface density was the same, and single-sided surface density was 87 g/m$^2$) and was rolled after being cured, so as to form a negative electrode active material layer with the single-sided thickness of 54 $\mu$m on each of the both surfaces of the copper foil to obtain a negative electrode sheet.

**Embodiment 5**

The difference from Embodiment 1 was that: the three-dimensional graphene used in Embodiment 5 included overlapping graphene sheets, and the three-dimensional graphene had a porous structure. The average particle size of the three-dimensional graphene was 1.5 $\mu$m, the pore volume was 5 cm$^3$/g, and the average pore size of the porous structure in the three-dimensional graphene was 200 nm. A nanoindentation test was performed through an AFM to obtain the breaking strength at an overlapping position of the overlapping graphene sheets in the three-dimensional graphene of 30 N/m, and the lateral dimension of the overlapping graphene sheets was 10 nm to 100 nm.

**Embodiment 6**

The difference from Embodiment 1 was that: a silicon-carbon Si/C negative electrode with a specific capacity of 1250 mAh/g, polyacrylic acid, and three-dimensional graphene were mixed according to a mass ratio of 100:10:47 to prepare negative electrode slurry, and the single-sided surface density of the negative electrode slurry was 62.5 g/m$^2$, and the same surface capacity as that in Embodiment 1 was maintained.

**Embodiment 7**

The difference from Embodiment 1 was that: the average particle size of the three-dimensional graphene was 12 $\mu$m, the pore volume was 11 cm$^3$/g, and the average pore size of the porous structure in the three-dimensional graphene was 150 nm. A nanoindentation test was performed through an AFM to obtain the breaking strength at an overlapping position of the overlapping graphene sheets in the three-dimensional graphene of 20 N/m.

**Comparative example 1**

A method for preparing a negative electrode sheet included:
a silicon-carbon Si/C negative electrode with a specific capacity of 1250 mAh/g and polyacrylic acid were mixed according to a mass ratio of 100:5 to prepare negative electrode slurry, and then the negative electrode slurry was coated on both surfaces of a copper foil with the thickness of 8 $\mu$m (the double-sided surface density was the same, the single-sided surface density was 41.5 g/m$^2$, and the same surface capacity as that in Embodiment 1 was maintained) and was rolled after being cured, so as to form a negative electrode active material layer with the single-sided thickness of 30 $\mu$m on each of the both surfaces of the copper foil to obtain a negative electrode sheet.

**Comparative example 2**

A method for preparing a negative electrode sheet included:
$SiO_x$ (x=1.02), polyacrylic acid, and single-walled carbon nanotubes were mixed according to a mass ratio of 100: 14:0.5 to prepare negative electrode slurry, and then the negative electrode slurry was coated on both surfaces of a copper foil with the thickness of 8 $\mu$m (the double-sided surface density was the same, the single-sided surface density was 35.4 g/m$^2$, and the same surface capacity as that in Embodiment 2 was maintained) and was rolled after being cured, so as to form a negative electrode active material layer with the single-sided thickness of 25 $\mu$m on each of the both surfaces of the copper foil to obtain a negative electrode sheet. A lithium film with the thickness of 10 microns and the obtained negative electrode sheet were hot-pressed in an inert atmosphere to obtain a lithium-rich negative electrode sheet.

**Comparative example 3**

A method for preparing a negative electrode sheet included:
a silicon-carbon Si/C negative electrode sheet with a specific capacity of 1250 mAh/g, polyacrylic acid, and three-dimensional graphene were mixed according to a mass ratio of 100:5:2.5 to prepare negative electrode slurry, and then the negative electrode slurry was coated on both surfaces of a copper foil with the thickness of 8 $\mu$m (the double-sided surface density is the same, the single-sided surface density is 42 g/m$^2$, and the same surface capacity as that in Embodiment 1 was maintained) and was rolled after being cured, so as to form a negative electrode active material layer with the single-sided thickness of 30 $\mu$m on each of the both surfaces of the copper foil to obtain a negative electrode sheet. The three-dimensional graphene in Comparative example 3 was the same as that in Embodiment 1.

**Comparative example 4**

The difference between Comparative example 4 and Embodiment 2 is that $SiO_x$ (x=1.02), polyacrylic acid, single-walled carbon nanotubes, and three-dimensional graphene were mixed according to a mass ratio of 100: 14:0.5:55 to prepare negative electrode slurry.

Preparation for batteries for specific capacity test: Batteries were assembled by taking the negative electrode sheets prepared in various embodiments and comparative examples, Polyethylene (PE) diaphragms, and lithium foils with the thickness of 100 microns, and 1 mol/L LiPF6 serving as an electrolyte, where Ethylene Carbonate (EC) and Ethyl Methyl Carbonate (EMC) were in a volume ratio of 1:1, and the batteries were charged and discharged between 0.005 to 1.5 V

Preparation of batteries for cycling test: NCM811, Polyvinylidene Fluoride (PVDF) serving as a bonding agent, and a conductive agent Sup-P were mixed according to a mass ratio of 100:3: 1 to prepare mixed slurry, and the mixed slurry was coated on a surface of an aluminum foil according to the single-sided surface density of 225 g/m$^2$ to prepare a negative electrode sheet. Then, batteries were assembled by the prepared positive electrode sheet, and the negative electrode sheets or lithium-rich negative electrode sheets obtained in various embodiments and comparative examples, the PE diaphragms, and 1 mol/L LiPF6 serving as the electrolyte, where EC and EMC were in a volume ratio of 1:1. Cycling performance of corresponding batteries was tested.

First charge and discharge specific capacity test for negative electrode: The battery was discharged to 0.005 V at a constant current of 0.1 C, then was discharged to 0.005 V at a constant current of 0.05 C, and then was charged to 1.5 V at 0.1 C. First discharge specific capacity of negative electrode=discharge capacity/total mass of negative electrode active material layer; and first charge specific capacity of negative electrode=discharge capacity/total mass of negative electrode active material layer.

Capacity retention rate test: The battery was charged to 4.25 V at 0.5 C first, then was charged to a cut-off current of 0.1 C at a constant voltage of 4.25 V, then was discharged to 2.5 V at 1 C, and 300 cycles were performed, the first discharge capacity and the discharge capacity after the 300 cycles were recorded, and the capacity retention rate=-discharge capacity after 300 cycles/first discharge capacity. Test results are shown in Table 1 and Table 2.

Table 1

|  | First charge specific capacity (mAh/g) | First discharge specific capacity (mAh/g) | Capacity retention rate after 300 cycles (%) |
|---|---|---|---|
| Embodiment 1 | 1106.2 | 1332.8 | 88.9 |
| Embodiment 2 | 1367.8 | 1556.1 | 93.8 |
| Embodiment 3 | 1042.5 | 1256.0 | 90.3 |
| Embodiment 4 | 573.1 | 665.5 | 94.2 |
| Embodiment 5 | 1106.2 | 1332.8 | 88.5 |
| Embodiment 6 | 796.2 | 959.3 | 89.7 |
| Embodiment 7 | 1106.2 | 1332.8 | 83.5 |
| Comparative example 1 | 1190.5 | 1434.3 | 54.1 |
| Comparative example 2 | 1523.1 | 1732.9 | 65.4 |
| Comparative example 3 | 1179.2 | 1420.8 | 67.5 |
| Comparative example 4 | 1033.3 | 1183.6 | 92.1 |

It can be learned from Table 1 and FIG. 2 that the cycling performance of the battery in Embodiment 1 is significantly superior to those in Comparative example 1 and Comparative example 3. The cycling stability of the battery in Embodiment 2 is significantly superior to that in Comparative example 2. Comparing Embodiment 2 and Comparative example 4, it can be learned that excessive additive having compression and rebound properties is added, which cannot improve the cycling performance of the battery while reducing the specific capacity of an electrode sheet. Data in Table 1 show that the negative electrode sheet with a small volume expansion rate in the present disclosure can alleviate the pressure born in an interior of a battery core, thereby significantly improving the cycling stability performance of the battery.

The foregoing total batteries after the first charge and discharge specific capacity test were disassembled. Tests for rebound property and compression property of the electrode sheet were respectively performed on the negative electrode sheets obtained by dissembling the total batteries corresponding to various embodiments and comparative examples. Summary of results are shown in Table 2 and Table 3.

Method for testing rebound property of electrode sheet A pressure of $X_1$ Mpa is applied to an electrode sheet, the thickness $H_1$ of the electrode sheet under the pressure of $X_1$ Mpa is measured, the pressure is removed, the thickness $H_2$ of the electrode sheet is measured after the thickness of the electrode sheet is stable, and the rebound rate of the electrode sheet is:

$$\text{Rebound rate of electrode sheet } r = (H_2 - H_1)/H_1$$

Method for testing compression property of electrode sheet: A pressure of $X_2$ Mpa is applied to an electrode sheet with an initial thickness of $H_3$, the thickness $H_4$ of the electrode sheet under the pressure of $X_2$ Mpa is measured, and the compression rate of the electrode sheet is:

$$\text{Compression rate of electrode sheet } p = (H_3 - H_4)/H_3$$

Table 2 Test results of rebound property and compression property ($X_1$=0.5 Mpa, and $X_2$=0.3 Mpa)

|  | Rebound rate of electrode sheet | Compression rate of electrode sheet |
|---|---|---|
| Embodiment 1 | 5.2% | 4.3% |
| Embodiment 2 | 15.4% | 12.9% |

(continued)

|  | Rebound rate of electrode sheet | Compression rate of electrode sheet |
| --- | --- | --- |
| Embodiment 3 | 14.5% | 13.8% |
| Embodiment 4 | 3.8% | 3.6% |
| Embodiment 5 | 5% | 4.7% |
| Embodiment 6 | 36.0% | 34.3% |
| Embodiment 7 | 4.0% | 4.3% |
| Comparative example 1 | 0.1% | 0% |
| Comparative example 2 | 0.1% | 0% |
| Comparative example 3 | 1.5% | 1.2% |
| Comparative example 4 | 42.3% | 41.2% |

Table 3 Test results of rebound property and compression property ($X_1$=5 Mpa, and $X_2$=5 Mpa)

|  | Rebound rate of electrode sheet | Compression rate of electrode sheet |
| --- | --- | --- |
| Embodiment 1 | 7.28% | 6.06% |
| Embodiment 2 | 23.87% | 20.12% |
| Embodiment 3 | 21.61% | 20.29% |
| Embodiment 4 | 4.83% | 4.36% |
| Embodiment 5 | 7.25% | 6.86% |
| Embodiment 6 | 39.96% | 38.07% |
| Embodiment 7 | 6.40% | 6.84% |
| Comparative example 1 | 0.20% | 0.20% |
| Comparative example 2 | 0.11% | 0.10% |
| Comparative example 3 | 1.88% | 1.50% |
| Comparative example 4 | 47.38% | 45.73% |

It can be learned from Table 1 to Table 3 that the negative electrode sheets in Embodiments 1 to 6 have high rebound property and compression property. It can be learned from the data of Embodiment 2 and Comparative example 2 that the compression and rebound properties of the electrode sheet in Comparative example 2 after adding a conventional conductive agent after equal amounts of three-dimensional graphene and conventional conductive agent are added are poor and are the same as those of a conventional electrode sheet. The capacity retention rate of the battery assembled by the electrode sheet after 300 cycles is significantly lower than those of the batteries assembled by the electrode sheets in Embodiments 1 to 6. It can be learned from Comparative example 4 that, although an amount of three-dimensional graphene is added and the rebound rate and the compression rate of the electrode sheet are not within a range of 2% to 40%, the cycling performance of the battery will be reduced to some extent compared with those in the embodiments.

The foregoing embodiments show only several embodiments of the present disclosure, which are described specifically in detail, but are not to be construed as a limitation to the patent scope of the present disclosure. It is to be pointed out that for those of ordinary skill in the art, several transformations and improvements can be made without departing from the idea of the present disclosure, which all belong to the protection scope of the present disclosure. Therefore, the protection scope of the patent of the present disclosure are to be subject to the appended claims.

**Claims**

1.  A negative electrode sheet, comprising:

       a negative current collector; and
       a negative electrode active material layer, the negative electrode active material layer being arranged on a surface of the negative current collector, and the negative electrode active material layer comprising a negative electrode active material and an additive having compression and rebound properties,

wherein after a pressure X is applied in the thickness direction of the negative electrode sheet, the rebound rate of the negative electrode sheet is 2% to 40%, and the compression rate of the negative electrode sheet is 2% to 40%; and the pressure X satisfies the following: $0.3 \text{ Mpa} \leq X \leq 5 \text{ Mpa}$.

2. The negative electrode sheet according to claim 1, wherein a thickness of a single surface of the negative electrode active material layer is 10 $\mu$m to 150 $\mu$m.

3. The negative electrode sheet according to claim 1 or 2, wherein the negative electrode active material and the additive having compression and rebound properties are in a mass ratio of 100:3 to 50.

4. The negative electrode sheet according to any one of claims 1 to 3, wherein the negative electrode active material and the additive having compression and rebound properties are in a mass ratio of 100:3 to 30.

5. The negative electrode sheet according to any one of claims 1 to 4, wherein the negative electrode active material comprises at least one of graphite, hard carbon, Si, $SiO_x$, a silicon-carbon material, Sn, Sb, a silicon-based alloy, a lithium silicon oxide, or a silicon magnesium oxide, wherein the silicon-based alloy further comprises at least one of Li, Al, Mg, B, Ni, Fe, Cu, or Co in addition to Si, wherein the value of x is 0<x<2.

6. The negative electrode sheet according to any one of claims 1 to 5, wherein the negative electrode active material layer further comprises a bonding agent, the bonding agent comprises at least one of polyacrylic acid, sodium alginate, or polyimide; and the negative electrode active material and the bonding agent are in the mass ratio of 100:0.05 to 15.

7. The negative electrode sheet according to any one of claims 1 to 6, wherein the additive having compression and rebound properties is three-dimensional graphene.

8. The negative electrode sheet according to any one of claims 1 to 7, wherein the three-dimensional graphene satisfies at least one of the following conditions (1) to (5):

(1) the particle size of the three-dimensional graphene is 500 nm to 20 $\mu$m;
(2) the pore volume of the three-dimensional graphene is 1 $cm^3/g$ to 10 $cm^3/g$;
(3) the three-dimensional graphene comprises overlapping graphene sheets, and the breaking strength between the graphene sheets is 20 N/m to 50 N/m;
(4) the three-dimensional graphene comprises overlapping graphene sheets, and the lateral dimension of the graphene sheet is 10 nm to 100 nm, preferably, 10 nm to 20 nm; or
(5) the average pore size of the three-dimensional graphene is not greater than 250 nm.

9. The negative electrode sheet according to any one of claims 1 to 8, wherein the three-dimensional graphene comprises overlapping graphene sheets, and the lateral dimension of the graphene sheet is 10 nm to 20 nm.

10. The negative electrode sheet according to any one of claims 1 to 9, wherein the negative electrode active material layer further comprises a conductive agent, and the conductive agent comprises at least one of single-walled carbon nanotubes or carbon black; and the negative electrode active material and the conductive agent are in a mass ratio of 100:0 to 2.5.

11. A secondary battery, comprising the negative electrode sheet according to any one of claims 1 to 10.

12. An electrical device, comprising the secondary battery according to claim 11.

FIG. 1

FIG. 2

## INTERNATIONAL SEARCH REPORT

| International application No. |
| --- |
| **PCT/CN2023/101456** |

| A. | CLASSIFICATION OF SUBJECT MATTER |
| --- | --- |

H01M4/62(2006.01)i; H01M4/13(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, DWPI, ENTXT, VEN, CNKI: 电池, 负极片, 弹性, 压缩率, 导电剂, 添加剂, 石墨烯, battery, anode, elasticity, compression ratio, conductive agent, additive, graphene

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112103469 A (OPTIM (SHANGHAI) NEW ENERGY CO., LTD.) 18 December 2020 (2020-12-18)<br>     description, paragraphs 6-32 | 1-12 |
| A | CN 109065850 A (NANJING TECH UNIVERSITY) 21 December 2018 (2018-12-21)<br>     description, paragraphs 5-21 | 1-12 |
| A | CN 114628652 A (A123 SYSTEMS LLC) 14 June 2022 (2022-06-14)<br>     entire document | 1-12 |
| A | CN 111710874 A (GUANGZHOU NANO NEW MATERIAL TECHNOLOGY CO., LTD. et al.) 25 September 2020 (2020-09-25)<br>     entire document | 1-12 |
| A | US 2017283265 A1 (NEC CORP.) 05 October 2017 (2017-10-05)<br>     entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 September 2023** | **27 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/101456**

| Patent document cited in search report | | | Publication date (day/month/year) | Patent family member(s) | | | Publication date (day/month/year) |
|---|---|---|---|---|---|---|---|
| CN | 112103469 | A | 18 December 2020 | CN | 112103469 | B | 20 August 2021 |
| CN | 109065850 | A | 21 December 2018 | None | | | |
| CN | 114628652 | A | 14 June 2022 | CN | 114628652 | B | 07 July 2023 |
| CN | 111710874 | A | 25 September 2020 | CN | 111710874 | B | 08 December 2020 |
| US | 2017283265 | A1 | 05 October 2017 | JP | 2017532277 | A | 02 November 2017 |
| | | | | JP | 6583404 | B2 | 02 October 2019 |
| | | | | WO | 2016031084 | A1 | 03 March 2016 |
| | | | | US | 10608276 | B2 | 31 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210708415